# EUROPEAN PATENT SPECIFICATION

(11) **EP 2 223 305 B1**
(45) Date of publication and mention of the grant of the patent: **16.11.2016**
(21) Application number: 08875988.1
(22) Date of filing: 18.08.2008
(51) Int. Cl.: G21F 9/12, G21C 19/46

(54) **USE OF A WASH SOLUTION IN CONTINUOUS REPROCESSING OF NUCLEAR FUEL AND A SYSTEM THEREOF**
VERWENDUNG EINER WASCHLÖSUNG IN DER KONTINUIERLICHEN WIEDERVERARBEITUNG VON NUKLEARBRENNSTOFFEN UND SYSTEM DAFÜR
UTILISATION D'UNE SOLUTION DE LAVAGE APPROPRIÉE DANS UN RETRAITEMENT CONTINU D'UN COMBUSTIBLE NUCLÉAIRE ET SON SYSTÈME

(43) Date of publication of application: 01.09.2010
(73) Proprietor: The Secretary, Department Of Atomic Energy, Govt. of India, Mumbai 400 001, Maharastra (IN)
(72) Inventor: PERUMAL, Govindan, Kalpakkam 603 102 (IN); KRISHNAN, Dhamodharan, Kalpakkam 603 102 (IN); KADUKKAPPILLY, Subramanian, Vijayan, Kalpakkam 603 102 (IN); RAVINUTHALA, Venkata, Subba, Rao, Kalpakkam 603 102 (IN); MUTHUSWAMY, Venkataraman, Kalpakkam 603 102 (IN); RAJAMANI, Natarajan, Kalpakkam 603 102 (IN)
(74) Representative: Petraz, Gilberto Luigi
(86) International application number: PCT/IN2008/000516
(87) International publication number: WO 2010/020993

(56) References cited:
- GB-A- 835 690
- GB-A- 2 326 268
- US-B1- 6 270 737

## Description

### FIELD OF THE INVENTION

The present invention relates to nuclear fuel reprocessing and ,in particular, to cleaning of metal extracting solvent having tri-n-butyl phosphate, a hydrocarbon diluent and undesirable highly concentrated degradation products and its complexes with uranium, plutonium & fission products without any crud or emulsion formation. Importantly, the invention is directed to an effective washing solution for spent solvent generated during reprocessing of spent nuclear fuel of fast reactors and its selective use in the process for solvent washing in nuclear fuel reprocessing. Advantageously, the wash solution and the process for washing the spent solvent involving the same would favour recycling washed solvent in process for separation and purification of Plutonium and Uranium from spent fuel in fast reactors. More particularly, the invention is directed to an aqueous ammonium carbonate solution which in contact with an actinide metal extracting solvent including trin-butyl phosphate, a hydrocarbon diluents such as dodecane and a complex formed by din-butyl phosphate or other degradation product with Uranium, Plutonium or fission products would favour quantitative recovery of Plutonium and Uranium from the spent solvent and make it amenable for reuse. Such washing with aqueous ammonium carbonate is directed to not only meet the quality of solvent capable of recycling but also economic utilization of TBP in plants having high throughput. Advantageously, such washing process involve only Ammonium Carbonate solution without any metal ion introduction, hence it does not pose any problem during final recovery of U and Pu from the aqueous product. Advantageously also, according to selective provision of ammonium carbonate wash solution following the present invention, the Ammonium ions and Carbonate ions do not add up to the impurities in the final product stream and generating less voluminous waste containing less salt load as compared to conventional sodium carbonate washing and thus is found to favor wide scale application in Nuclear Fuel Reprocessing industry and treatment of plutonium rich fuel/spent solvent reprocessing plants, especially the Fast Breeder Test Reactor Fuels in CORAL facility, and enable achieving the much desired economy and productivity in operation of these plants.

### BACKGROUND ART:

It is known in the art of Nuclear fuel Reprocessing plant the recovery of precious U and Pu from spent solvent such as the modified Purex process (R. Natarajan, IANCAS Builetin, 14 (2) (1998) 27.) employing Tri-n-butyl phosphate (TBP) in n-dodecane as solvent for the separation & purification of Plutonium and Uranium from the spent fuel of Fast Breeder Reactors. Such prior art processes involve head end steps, two cycles of co-extraction, one partitioning cycle for uranium and plutonium and re-conversion of uranium and plutonium. The TBP and diluents degrade due to radiolysis and chemical degradation generating degradation products that holds U, Pu and FPs and hasten degradation process which in turn leads to poor phase separation. This is why the solvent cleaning process becomes essential in Nuclear fuel reprocessing in Fast Breeder Reactor. The organic streams obtained after stripping in the co-decontamination cycles are called spent solvent streams. These spent solvent streams contain high concentration of 'U/Pu' than that encountered in long cooled thermal reactor fuel reprocessing. The retention of high concentration of'U/Pu' in the spent solvent streams can be attributed to the presence of degradation products like HDBP, H₂MBP, etc. These degradation products form stable complexes with uranium & plutonium and fission products (T. Tsujixo, T.Ishihara, J.Nucl.Sci.Technol.,3(4) (1966) 144.) leading to poor phase separation, poor decontamination factor and losses of plutonium to the raffinate and organic stream. It is widely recognized that the radiolytic and chemical decomposition of TBP and the diluents can adversely affect processing operations as well as disposal of solvent as waste. Hence removal of degradation products from the solvent is of great importance. Several methods employing different reagents such as (i) sodium carbonate (ii) hydrazine or hydrazine carbonate (iii) hydrazine oxalate (iv) U(IV) nitrate and (v) tetra methyl ammonium hydroxide are reported for spent solvent treatment process.

Some of the prior art patents and literatures have attempted to solve the problem of stripping of U and Pu from the organic complexes of spent solvent of FBR fuel reprocessing to aqueous phase but none could deliver satisfactory level of stripping of actinide metals from complexes and recovery of solvent fit for recycling on continuous scale in nuclear fuel reprocessing plant.

US 3949049 entitled 'Method of stripping plutonium from tributyl phosphate solution which contains dibutyl phosphate-plutonium stable complexes' is direcetd to Fast breeder fuel elements which are highly burnt-up which are reprocessed by extracting uranium and plutonium into an organic solution containing tributyl phosphate. The tributyl phosphate degenerates at least partially into dibutyl phosphate and monobutyl phosphate, which form stable complexes with tetravalent plutonium in the organic solution. This tetravalent plutonium is released from its complexed state and stripped into aqueous phase by contacting the organic solution with an aqueous phase containing tetravalent uranium.

US 4059671 is related to a method for increasing the lifetime of an extraction medium used for reprocessing spent nuclear fuel and/or breeder materials wherein a method is provided for increasing the lifetime of an extraction medium containing an organophosphorus acid ester and a hydrocarbon and being used for reprocessing spent nuclear fuel and/or breeder materials. Impurities resulting from chemical and/or radiolytic decomposition and interfering compounds of such impurities with radionuclides are removed from the extraction medium by bringing the extraction medium, after use, into intimate contact with an aqueous hydrazine hydrate solution having a concentration of between about 0.1 molar and about 1.0 molar at a temperature between about 20.degree. C to about 75 degree. C. The aqueous hydrazine hydrate solution is then separated from the extraction medium.

US 4162230 also relates to a method for the recovery of actinide elements from nuclear reactor waste wherein a process for partitioning and recovering actinide values from acidic waste solutions resulting from reprocessing of irradiated nuclear fuels by adding hydroxylammonium nitrate and hydrazine to the waste solution is disclosed. Separation is achieved by contacting the loaded extractant with two aqueous strip solutions, a nitric acid solution to selectively strip the americium, curium and rare earth values and an oxalate solution of tetramethylammonium hydrogen oxalate and oxalic acid or trimethylammonium hydrogen oxalate to selectively strip the neptunium, plutonium and fission product values. Uranium values remain in the extractant and may be recovered with a phosphoric acid strip. The neptunium and plutonium values are recovered from the oxalate by adding sufficient nitric acid to destroy the complexing ability of the oxalate, forming a second feed, and contacting the second feed with a second extractant of tricaprylmethylammonium nitrate in an inert diluent whereby the neptunium and plutonium values are selectively extracted. The values are recovered from the extractant with formic acid.

US 4208377 entitled 'Process for recovering actinide values' is directed to a process for rendering actinide values recoverable from sodium carbonate scrub waste solutions containing these and other values along with organic compounds resulting from the radiolytic and hydrolytic degradation of neutral organophosphorous extractants such as tri-n butyl phosphate (TBP) and dihexyl-N,N-diethyl carbamylmethylene phosphonate (DHDECAMP) which have been used in the reprocessing of irradiated nuclear reactor fuels. The scrub waste solution is preferably made acidic with mineral acid, to form a feed solution which is then contacted with a water-immiscible, highly polar organic extractant which selectively extracts the degradation products from the feed solution. The feed solution can then be processed to recover the actinides for storage or recycled back into the high-level waste process stream. The extractant is recycled after stripping the degradation products with a neutral sodium carbonate solution.

US 4358426 teaches a method for cleaning solution used in nuclear fuel reprocessing. Nuclear fuel processing solution consisting of tri-n-butyl phosphate and dodecane, with a complex of uranium, plutonium, or zirconium and with a solvent degradation product such as di-n-butyl phosphate therein,involving contacting the same with an aqueous solution of a salt formed from hydrazine and either a dicarboxylic acid or a hydroxycarboxylic acid, thereby removing the aforesaid complex from the processing solution. Also disclosed therein is a method for removing a complex of uranium, plutonium, or zirconium with mono-butyl phosphate or di-n-butyl phosphate degradation product of tri-n-butyl phosphate in a nuclear fuel reprocessing solution containing said complex, tri-n-butyl phosphate and a hydrocarbon diluent, comprising contacting said solution with an aqueous solution of a salt selected from the group consisting of hydrazine oxalate, hydrazine tartrate, hydrazine lactate and hydrazine glycolate.

US 4941998 discloses a method of washing a solvent in the reprocessing of irradiated nuclear fuels wherein the solvent is washed with an aqueous solution in a mixer-settler having at least one stage which includes a mixing chamber and a settling chamber. The pH of the dispersion in the mixing chamber is measured and an amount of washing solution is added to influences the pH towards the desired operational value. An apparatus for carrying out the method is also disclosed. As a consequence of this invention, it is possible to avoid the previously necessary addition of the washing solution, for example of the sodium carbonate, which is far in excess of the actual requirement, for removing and neutralizing the decomposition products. By a controlled metered addition of the washing agent, only the actual requirement is adjusted to the particular operating conditions. The previous procedure in which an amount of Na ₂ CO ₃ solution always had to be introduced in excess by a permanently set external phase ratio, assuming the most unfavorable conditions, can now be avoided. The requirement of washing agent is determined directly at the place where it is required and not at the location where the washing agent is discharged.

It would be apparent from the above discussed state of the art of solvent washing in nuclear fuel reprocessing that the most common solvent wash reagent utilized in existing reprocessing has been sodium carbonate solution. The drawbacks of such sodium carbonate solution based washing include (a) that for every tonne of fuel processed there may be as much as 100 Kg of NaNO₃ which is generated as radioactive waste. (H.Goldacker, H.Schmieder, F. Steingrunn and L. Stieglitz, Kerntechnik, 18, (1976) 426.) (b) it leads to the formation of crud, which hindered the stripping (washing) equipment operation and Plutonium accounting.

Also, although it has been reported in conventional washing treatment with sodium carbonate, that crud formation can be avoided while keeping the pH greater than 8 ( Sugai,-Hiroshi and Sato,-Kenji. JP patent document 5-157886/A/; JP patent, 3-349393), but such controlling of the pH in the mixer settler equipment in continuous operation mode required some other additional equipments, making the process again complex and expensive.

Alternative approaches based on the use of hydrazine or hydrazine carbonate instead of sodium discussed above has also been reported (H.Goldacker, H.Schmieder, F. Steingrunn and L. Stieglitz, Kerntechnik, 18, (1976) 426 and O.K. Tallent, J.C. Mailen, Nucl.Technol., 59 (1982) 51). Though these reagents reduce the solid waste drastically, the main disadvantage of these reagents is instability even at room temperature and difficulty in preparation and storage. Moreover, there are potential hazards including the possibility of reaction with nitric acid or nitrous acid giving rise to sudden release of gases (O.K. Tallent, J.C. Mailen, Nucl.Technol., 59 (1982) 51). Apart from the above problems, interfacial crud formation is also observed which leads to the poor phase separation during the laboratory trails with the actual spent solvent from CORAL facility.

Hydrazine oxalate is also reported as one of the wash agents in the prior art reprocessing of the Nuclear fuels/spent solvents (O.K. Tallent, D.J.Crouse and J.C. Mailen, US Patent, 4358426, 423/10, 1982). Apart from the potential hazards of hydrazine salts, this method also has the drawback of loss of plutonium in the filtrate during the pre-concentration step due to the oxalate complex formation, which cannot be destroyed easily.

U(IV) nitrate is also reported to strip the plutonium preferentially from the organic (Wilhelm Ochsenfeld and Helmut Schmieder, US Patent, 3949049, 423/10, 1976.) whereby no uranium recovery is possible; hence additional treatment is always required to get the solvent free from metal ion.

Tetra methyl ammonium hydroxide as an alternative solvent wash solution has also been reported in the literature (Naohito UETAKE, Fumio KAWAMURA and Hideo YUSA: J.Nucl.Sci. Technol., 26(2) (1989) 270). The process is economically unviable as tetra methyl ammonium hydroxide is a costly chemical.

There has, therefore, been a need in the art of Nuclear Fuel Reprocessing, especially for the U/Pu rich fuel reprocessing in Fast Breeder Test Reactor Fuels to provide for better and efficient wash solvents so as to avoid presence of degradation products as stable complexes leading to poor phase separation, poor decontamination factor and losses of plutonium to the raffinate and organic stream. It has been also a requirement to develop a simple and economic process for solvent washing in spent solvent treatment for nuclear fuels of Fast Rectors wherein a selective metal extracting solvent would on one hand provide means for improved cleaning of the spent solvent rich in degradation products and its complexes with Uranium and Plutonium and fission products without any crud or emulsion formation and on the other hand the organic stream obtained after treatment would meet the required quality of a fresh solvent which can be recycled to the plant for economic utilization of the solvent. Importantly, the wash solution is also required to favour avoiding the loss of plutonium in filtrate or raffinate and thereby save the precious metal and the wash procedure can ensure effective recovery of U and Pu finally from the aqueous solution avoiding any metal ion induction, making the process cost effective, simple, easy to operate in room temperature to favor wide scale application in Nuclear Fuel reprocessing plants.

### OBJECTS OF THE INVENTION

It is thus the basic object of the present invention to meet the above need in the art of Nuclear Fuel Reprocessing and provide for better and efficient wash solvents which on one hand would avoid problems of poor phase separation, poor decontamination factor and losses of plutonium to the raffinate and organic stream and on the other hand also ensure that the washed organic solvent is either rendered suitable for reuse/recycling as a fresh solvent or at least the same is rendered environment friendly for safe disposal as a waste.

Another object of the present invention is directed to develop a simple and economic process for solvent washing in spent solvent treatment for nuclear fuels of Fast Rectors wherein a selective metal extracting solvent would on one hand provide means for improved cleaning of the spent solvent rich in degradation products and its complexes with Uranium and Plutonium and fission products without any crud or emulsion formation and on the other hand the organic stream obtained after treatment would also meet the required quality of a fresh solvent which can be recycled to the plant for economic utilization of the solvent.

A further object of the present invention is directed to an improved process for solvent washing in nuclear fuel reprocessing which would take care of avoiding the radiolytic and chemical decomposition of tri-n-butyl phosphate present in the spent solvent of nuclear fuel reprocessing and the diluents thereby favouring processing operations as well as favouring possible reuse /recycling of the TBP based solvent for its economic utilization or at least meet the disposal concerns of such solvent as a waste.

A further object of the present invention is directed to a process of Nuclear fuel reprocessing of the solvent capable of achieving effective washing of solvent and quantitative recovery of U/Pu, avoiding any crud or emulsion or precipitate formation.

A still further object of the present invention is directed to a process for cleaning/solvent washing in nuclear fuel reprocessing plant wherein effective recovery of the U/Pu from actinide metal extracting solvent comprising TBP, a hydrocarbon diluent such as dodecane and a complex formed by DBP or other degradation product with uranium, plutonium or fission products could be achieved by way of selective process favouring complexing of uranium and plutonium with the selective solvent provided as a wash solution.

A still further object of the present invention directed to a process for cleaning/solvent washing in nuclear fuel reprocessing plant wherein the organic stream obtained after treatment could meet the quality of solvent clean enough to be recycled to the plant for economic utilization of the solvent.

An yet further object of the present invention directed to a process for cleaning/solvent washing in nuclear fuel reprocessing plant wherein easy phase separation would be possible thereby makes the process amenable for deploying continuous process equipment such as Mixer Settler.

A further object of the present invention directed to a process for cleaning/solvent washing in nuclear fuel reprocessing plant wherein washing procedure involving selective wash solution without any metal ion induction and thereby favoring final quantitative recovery of U and Pu from the aqueous product.

A still further object of the present invention directed to a process for cleaning/solvent washing in nuclear fuel reprocessing plant wherein washing procedure involving only selective wash solution, wherein the waste volume generated would contain less salt load compared to conventional washing using sodium carbonate solution, making the process adaptable for large scale plants..

A still further object of the present invention directed to a process for cleaning/solvent washing in nuclear fuel reprocessing plant wherein the organic phase obtained after washing with selective wash solution would be amenable for recycling so that it reduces the cost of TBP and also the volume of the TBP wasted.

### SUMMARY OF THE INVENTION

Thus according to the basic aspect of the present invention there is provided a use of a washing solution as set out in claim 1 for spent solvent generated during reprocessing of spent nuclear fuel of Fast Reactor comprising aqueous ammonium carbonate solution having effective concentration of ammonium carbonate such as to favour forming strong complex with U and/or Pu. Importantly, the above washing solution for spent solvent according to the invention includes an effective concentration of ammonium carbonate of at least about 5% and in the range of 5% to 10%.

Another aspect of the invention is directed to said washing solution for spent solvent generated during reprocessing of spent nuclear fuel wherein the aqueous ammonium carbonate solution is provided with selective concentrations of ammonium carbonate such as to favour stripping of anyone or more of Uranium , Plutonium, DBP and fission products.

Yet Another aspect of the present invention directed to said washing solution according to the present invention wherein the aqueous ammonium carbonate solution is provided with selective concentrations of ammonium carbonate such as to favour forming strong complex with said U, Pu, DBP and fission products present in the spent solvent and stripping into aqueous phase without any emulsion or crud or precipitation formation.

According to yet further important aspect of the present invention the same is directed to a process for solvent washing in Nuclear fuel reprocessing using the above wash solution comprising as set out in claims 2 and 3:
adding said aqueous ammonium carbonate wash solution to the spent solvent generated during the reprocessing of spent nuclear fuel of fast Reactors such as to favour forming of strong complex with constituents of the degraded solvent and favour its stripping from the solvent into the aqueous phase without any emulsion or crud or precipitate formation; and equilibration and separation of the aqueous and organic phases.

In particular, in the above said process for solvent washing in Nuclear fuel reprocessing according to the present invention the said spent solvent comprises an actinide metal extracting solvent.

A further aspect of the present invention is directed to a process for solvent washing in Nuclear fuel reprocessing wherein the said actinide metal extracting solvent comprises tri-n-butyl phosphate, hydrocarbon diluent including n-dodecane, complex formed by di-butyl phosphate or other degradation products with uranium, Plutonium or fission products.

Importantly according to a further aspect in the said process for solvent washing in Nuclear fuel reprocessing the said aqueous ammonium carbonate wash solution comprises of ammonium carbonate concentration of atleast about 5% and in the range of 5% to 10%.

According to the present invention the same is directed to a process for solvent washing in Nuclear fuel reprocessing wherein said ammonium carbonate solution forms complexes and is used to strip the Uranium, Plutonium and DBP alongwith fission products such that the resultant organic comprises less than 5mg/L of Plutonium and 5mg/L of Uranium and less than 10mg/L of DBP concentration.

A further aspect of the process for solvent washing in Nuclear fuel reprocessing according to the present invention is directed such that the degraded /spent solvent is received from the stripper stages of PUREX process for the reprocessing with burn up (from 25 GWd/t to >155 GWd/t) Plutonium rich (70%) mixed Plutonium /Uranium carbide fuel from Fast Breeder Test Reactor (FBTR).

Importantly, in the said process for solvent washing in Nuclear fuel reprocessing the degraded /spent solvent can also be received from stripper stages of the reprocessing of higher burn up Plutonium rich spent fuel of any fast reactor.

Another important aspect of the present invention is directed to a process for solvent washing in Nuclear fuel reprocessing wherein the treated/washed organic with retained level of only <5 mg/L of Uranium and < 5 mg/L of Plutonium is either recycled as solvent for Nuclear Fuel reprocessing or rendered amenable for the disposal in waste form.

A still further aspect of the present invention is directed to a process for solvent washing in Nuclear fuel reprocessing wherein said organic feed is subjected to multi stage contact with the aqueous ammonium carbonate solution so as to substantially strip out remaining traces of the complexes formed with the constituents of the degraded solvent such as to render the solvent reusable by recycling into the process of Nuclear fuel reprocessing.

An yet further aspect of the present invention is directed to said process for solvent washing in Nuclear fuel reprocessing wherein prior to recycling the treated/washed spent solvent the same is subjected to solvent quality analysis involving (a) settling time evaluation (b) estimation of DBP concentration and (c) Plutonic retention test.

In the above process for solvent washing in Nuclear fuel reprocessing of the present invention if the quality criteria of the treated/washed spent solvent including said settling time, DBP concentration and Plutonic Retention are found comparable with the fresh solvent, the treated/washed solvent is continuously recycled into the process, thus economizing use of fresh TBP in solvent.

According to another aspect of the present invention the same is directed to a process for solvent washing in Nuclear fuel reprocessing wherein said aqueous ammonium carbonate solution forms strong complexes with fission products like Ru & Cs are stripped into the aqueous phase without any emulsion or crud or precipitate formation.

According to yet another aspect of the present invention the same is directed to said process for solvent washing in Nuclear fuel reprocessing wherein said aqueous to organic contact is done in stages involving plurality of settler tanks with treated/washed organic from the preceding tank subjected to a further contact with ammonium carbonate in another subsequent settler tank until the washed solvent attains a desired quality suitable for recycling.
said process for solvent washing in Nuclear fuel reprocessing wherein the aqueous to organic ratio used is of 1 to 2 : 1 to 5 preferably 1:4.

Another aspect of the process for solvent washing in Nuclear fuel reprocessing as of the present invention comprises recovering the Uranium/Plutonium from the carbonate complex.

A still further aspect of the present invention is directed to a system for carrying out continuous process as set out in claim 14 for treatment of said spent organic solvent released from a process for separation and purification of Plutonium and Uranium from spent fuel of fast reactors comprising:
contacting the spent organic solvent with ammonium carbonate solution in at least one mixer settler whereby the washed organic and aqueous product containing said carbonate complex are recovered separately ;
means to continuously store and recycle the washed solvent with desired characteristics for subsequent use for separation of Uranium and Plutonium from spent fuel of fast reactor and means to continuously store and then subject the aqueous phase recovered to treatment to reclaim the Plutonium and Uranium therefrom for subsequent use based on end characteristics of the recovered metal.

According to yet another aspect the system of the invention for carrying out continuously process comprises subjecting the washed organic to further subsequent contact with ammonium carbonate in further mixer settlers downstream until the washed solvent attains the desired characteristics for said recycling.

According to yet further aspect of the present invention there is provided a process for separation and purification of Plutonium and Uranium from spent fuel of fast reactors as set out in claim 16 comprising :
i) using a metal extraction solvent comprising Tri-n-butyl phosphate in n-dodecane for said separation and purification of Plutonium and Uranium from the spent fuel of fast reactors; and
ii) washing of the spent solvent used in the step i) above with ammonium carbonate solution following the process as described previously.

Advantageously, in the above disclosed process for separation and purification of Plutonium and Uranium from spent fuel of fast reactors the thus washed solvent is preferably based on its quality characteristics continuously recycled into the process.

According to another aspect of the present invention the same is directed to a process wherein the quantitative recovery of Plutonium and Uranium from the spent solvent and the treated/washed solvent are analyzed and reused based on its quality.

The details of the invention, its objects and advantages are explained hereunder in greater detail in relation to non-limiting exemplary illustrations and following accompanying figures:

### BRIEF DESCRIPTION OF THE ACCOMPANYING FIGURES:

Figure1: is the process flow diagram illustrating various stages in the Fast Reactor general process flow involving the spent fuel and required step of solvent clean up;
Figure 2: is the illustration of the block diagram illustrating in greater detail the solvent cleaning process for U/Pu recovery;
Figure 3: is a graphical representation of the determination of the optimum strength/concentration of aqueous ammonium carbonate solution wash solvent proposed by the present invention for maximum plutonium recovery;
Figure 4: is the illustration of the conventional solvent washing involving 10% sodium carbonate washing solution showing CRUD formation;
Figure 5: is the illustration of the solvent washing involving 10% ammonium carbonate washing solution according to the present invention, showing organic and aqueous phase separation free of crud/emulsion/precipitation formation; and
Figure 6: is the flow chart illustrating the steps/stages in the spent-organic treatment - continuous process in accordance with the present invention;
Figure 7: is the image illustrating the application of solvent washing according to the invention in continuous mode, in mixer settler in CORAL facility, showing the solvent washing set up in inset and the location thereof in the mixer settler.

### DETAILED DESCRIPTION OF THE INVENTION WITH REFERENCE TO THE ACCOMPANYING FIGURES AND EXAMPLES

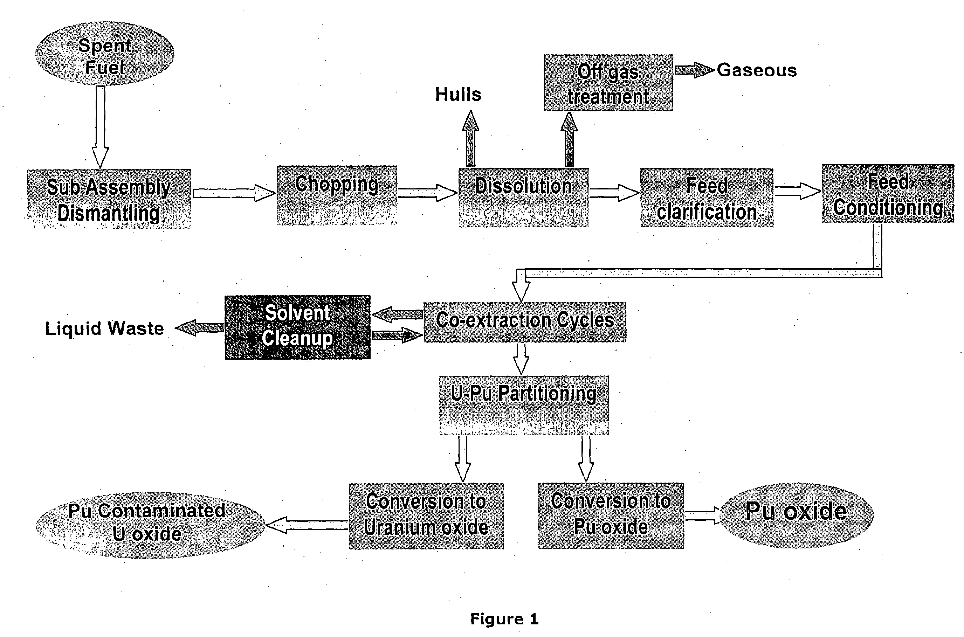

Reference is first invited to the accompanying Figure 1 which illustrates the flow process representing the Nuclear fuel reprocessing in general in a Fast Breeder Reactor wherein the spent fuel obtained from the stripper stages of PUREX process, is shown to pass through a number of process steps to undergo Solvent Cleanup subsequent to the Co-extraction cycles for U/Pu. Then the U and Pu are separated out at partitioning stage and finally subjected to conversion process respectively to Uranium oxide and Plutonium oxide.

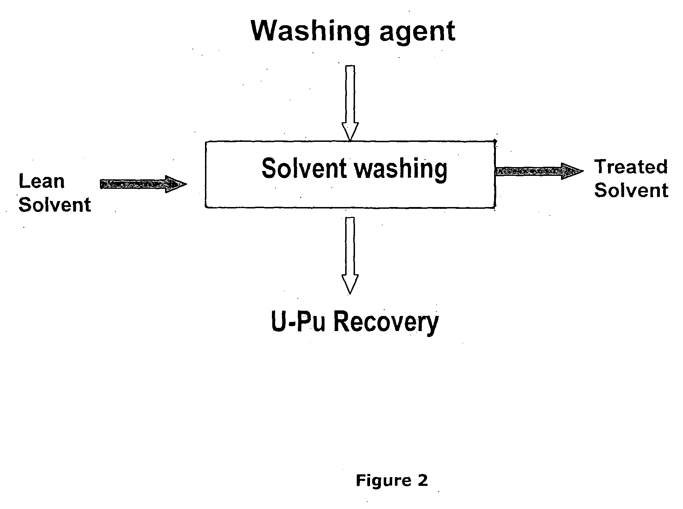

Reference is now invited to the accompanying Figure 2 which illustrates the basic stages of solvent washing/cleaning process with representative block diagram wherein the lean/spent solvent comprising the undesired chemicals and complexes along with high concentration of U and Pu is subjected to contact with the solvent washing solution for selective residence time such that the treated/washed solvent obtained is having desired quality fit for recycling to the Reactor fuel reprocessing plant or at least amenable for safe disposal as a waste with the possible recovery of U and Pu from solvent having requisite purity and concentration which can be reused as fuel in the Fast breeder Reactor.

The manner of achieving the above purposes of solvent washing/cleaning in accordance with the invention and its efficacy and cost-effectiveness is illustrated in greater detail by way of the following illustrative non-limiting examples:

### EXAMPLES:

### Ingredients used under the exemplary studies:

Nitric acid, sodium nitrite, oxalic acid, uranyl nitrate, hydrazine and ammonia solution all of GR/AR grade. Hydrazine carbonate used was of commercial grade. Ammonium carbonate used was obtained from E-merk purified product. The spent solvent used in the studies was from the process campaigns i.e. Reprocessing of Fast Breeder Test Reactor fuel in CORAL facility.

### Apparatus used under the exemplary studies:

PVC laboratory wares, Teflon stirring rods, Visible digital spectrophotometer: Systronic-166, Scintillation counter: ECIL-RCS 4027A, pH meter: Elixir-PHM 100 were used for measurements.

### Example-I:

### Selection of suitable washing agent:

At the first step tests were carried out to find the suitable washing agent from among U(IV)/N₂H₄, oxalic acid, sodium carbonate, hydrazine carbonate and ammonium carbonate. Known volumes of different washing agents were added to known volume of actual plant solution and equilibrated. Washing efficiency of the above reagents in single contact was compared and data obtained are represented in the Table 1 hereunder:

**Table1 :**

| **Study of washing efficiency of washing agents:** | | | | | | | | |
|---|---|---|---|---|---|---|---|---|
| Expt. No. | Reagent | Feed Organic | | Treated organic | | Strip product | | Remarks |
| | | | | U g/L | Pu g/L | U g/L | Pu g/L | |
| | | U g/L | Pu g/L | | | | | |
| 1 | @U(IV)/N₂H₄ | 1.74 | 0.698 | 2.12 | 0.42 | 0.42 | 0.29 | No crud formed |
| 2 | 0.5MOxalic acid | 1.39 | 1.56 | 1.06 | 1.24 | 0.75 | 0.23 | Crud observed |
| 3 | 0.5MOxalic acid in 2NHNO3 | 1.39 | 1.56 | 0.66 | 0.176 | - | 0.34 | Precipitate observed |
| 4 | 5% Hydrazine carbonate | 2.37 | 1.58 | 0.068 | 0.320 | 2.3 | 0.543 | observed Crud observed |
| 5 | 5% Na₂CO₃ | 1.89 | 1.7 | 0.010 | 0.035 | 1.9 | 0.85 | Crud observed |
| 6 | 5% (NH₄)₂CO₃ | 1.89 | 1.7 | 0.10 | 0.098 | 1.8 | 1.61 | No crud formed |

| | | | | | | | | |
|---|---|---|---|---|---|---|---|---|
| Feed organic/spent organic from the plant solution (FBTR fuel Reprocessing): @ U⁴⁺ = 0.780g/L in 0.05M HNO₃ and 0.005M N₂H₄ **O/A=100ml/100ml=1:1, Contact time = 10minutes, for experiment No. 1,5&6** **O/A=100ml** / **20ml =5:1, Contact time = 10minutes, for experiment No. 2&3** **O/A = 2ml/2ml=1:1, Contact time = 10minutes, for experiment No. 4** | | | | | | | | |

From the data in Table 1 above it can be found that only 42% of plutonium was stripped when washing the spent solvent with U(IV)/N₂H₄. Addition of U(IV) increased the uranium load in the plant which required additional step to remove uranium from the organic and also the yield increased feed volume in oxalate precipitation step due to the addition of aqueous solution of NaNO₂ for destruction of N₂H₄. In washing with Oxalic acid, only 15-20% of plutonium recovery is possible. It requires more number of contacts for complete recovery of plutonium and subsequently it results in more waste volume. Apart from this, crud and precipitate are also formed during washing which lead to poor phase separation and difficulty in mass balance.

In the case of both sodium carbonate and hydrazine carbonate washings, plutonium recovery was 50% and 34% respectively. But crud formation was also observed in both processes, which posed a serious problem in plutonium recovery and its accounting.

In the case of ammonium carbonate washing advantageously 94.7% of plutonium and 95% of uranium could be stripped in to the aqueous phase with out any crud or emulsion or precipitate formation. Except carbonates all other reagents of the preliminary study retained Uranium, DBP and fission products in the organic itself which any how required further process step to remove uranium, DBP and fission products in order to qualify the solvent for reuse. Neither sodium carbonate nor hydrazine carbonate could be thus used for washing as these formed crud as well as emulsion especially while washing the typical spent solvent generated from the reprocessing of Fast Breeder Test Reactor (FBTR) fuel of high burn up plutonium rich mixed carbide.

Importantly ,however, the aqueous ammonium carbonate wash solution was found to meet all desired requirements of such wash solution and overcame all the difficulties/limitations of the other wash solvents tried. It is identified that there is certainly some selective and competitive complexion of Uranium and Plutonium with ammonium carbonate providing for such highly selective advantages of its use as a wash solution for such spent solvent including such complexing agents for Pu/U . Accordingly, the aqueous ammonium carbonate was identified as the most suitable washing agent for typical spent solvent generated from the reprocessing of Fast Breeder Test Reactor fuel of high burn up plutonium rich mixed carbide.

### Example-II:

### Optimization of concentration of ammonium carbonate:

In the next step having identified the suitability of ammonium carbonate as the best suitable wash solution for spent solvent washing in nuclear fuel reprocessing ,the desired concentration level of ammonium carbonate in the wash solution was studied. Spent solvent from the plant stream (100ml) were taken and used for the trials. To these 100 ml of aqueous ammonium carbonate solution having varied concentration were added. These were equilibrated for five minutes and allowed to settle for two minutes. Aqueous and organic phases were separated using separating funnel. Plutonium and uranium in both phases were analysed by radiometry and PAR method respectively (T. M. Florence and Y. Farrar, Anal Chem., 31(1963) 1613.).

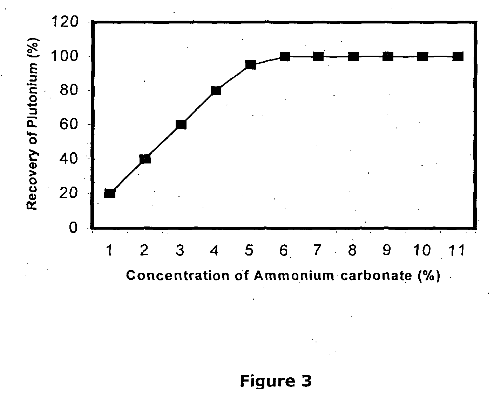

The effect of ammonium carbonate concentration on the recovery of plutonium as obtained during the studies are represented in the accompanying Figure 3. The figure shows that the plutonium recovery increased as a function of ammonium carbonate concentration up to 5% and remained the same beyond 5% to till the range of study. This increase is attributed to the increased solubility of plutonium carbonate in the ammonium carbonate medium. A gradual increase of plutonium in the aqueous phase which reached maximum at 5% of ammonium carbonate was observed. No further change is observed on increasing the concentration of ammonium carbonate. The same trend is observed in uranium stripping. It was thus identified that atleast 5% preferably 5-10% of ammonium carbonate was the optimal concentration of the ammonium carbonate for plutonium stripping from spent solvent.

### Example-III:

### Determining the effect of A/O ratio and number of contacts:

For this study, a known volume of spent solvent was taken. To this a known volume of aqueous ammonium carbonate solution having fixed concentration was added. This was equilibrated for five minutes and allowed to settle for two minutes. Aqueous and organic phases were separated using separating funnel. Both organic and aqueous phases were analysed for plutonium and uranium. Similar procedure was followed by varying O/A ratio (1:1, 1:1.5). With fixed O/A ratio (1:1.5), three contacts were given to facilitate complete recovery of uranium and plutonium.

The results of effect of number of contacts for maximizing the quantitative stripping of plutonium and uranium with 5-10% aqueous ammonium carbonate solution in the ratio of 1:1.5 (O/A) as obtained is represented in Table 2 hereunder:

**Table 2:**

| **Effect of number of contact on recovery of plutonium from spent organic:** | | | | | | |
|---|---|---|---|---|---|---|
| **Feed organic/spent organic from plant solution:** [Pu]= 1.7g/L, [U]= 1.89g/L, [H⁺]=0.3M, β= 0.16mCi/L, γ = 5.78mCi/L, [HDBP] = 2.0 g/L,contact time = 5 minutes, O/A=1:1.5; | | | | | | |
| **Washing reagent : 5-10% aqueous ammonium carbonate;** | | | | | | |
| Contact No | Treated organic | | Strip product | | Pu Relative recovery (%) | Pu total recovery (%) |
| | Volume (ml) | [Pu] g/L | Volume (ml) | [Pu] g/L | | |
| I | 60 | 0.066 | 90 | 1.09 | 96.18 | 96.18 |
| II | 60 | 0.012 | 60 | 0.055 | 83.3 | 99.41 |
| III | 60 | 0.004 | 60 | 0.008 | 66.66 | 99.88 |

The data in Table 2 indicates that 96% of plutonium was stripped out in a single contact, 3.2% in second contact and 0.4% in third contact. The total recovery of plutonium achieved by giving just two contacts was 99.4%. The resultant organic after washing with aqueous ammonium carbonate, retained less than 5mg/L of plutonium. In the case of uranium, almost 99% was recovered in the first contact itself. Since 'U/Pu' recovery is > 99% and retained only < 5mg/L of U & <5mg/L Pu in the treated/washed organic, it can either be recycled to the plant or was found to be amenable for the disposal to the waste form. In order to check its suitability for recycling, solvent quality tests were next carried out.

### Example -IV:

### Solvent quality test :

The important outcome of this study was recognition of the need to evaluate the quality of the solvent after treatment. In order to qualify the treated/washed solvent, following quality criteria were checked.
(i) **Settling time:** A known volume of ammonium carbonate washed solvent and 1M HNO₃ in 1:1 ratio were taken and the same volume ratio of fresh solvent and 1M HNO₃ was also taken separately. Both were equilibrated for 10 minutes and allowed to settle.

Comparative statement of settling time between washed solvent and fresh solvent as obtained was noted and represented in Table 3 hereunder:

**Table 3:**

| **Comparative statement of settling time:** | | | | |
|---|---|---|---|---|
| | **Volume of organic (ml)** | **Volume of 1M HNO₃ (ml)** | **Mixing time (min)** | **Settling time (sec)** |
| Treated/washed solvent | 50 | 50 | 10 | 40 |
| Fresh solvent | 50 | 50 | 10 | 40 |

The data in Table 3 shows that settling time for both the treated/wahed solvent is maintained same as that of the fresh solvent, while testing comparative quality criteria for the two types.

### (ii) DBP concentration:

The resultant organic (washed organic) after the treatment/washing with ammonium carbonate was analyzed for DBP which showed that the DBP content in the washed organic was < 10 mg/L (10 ppm). This value was well within the limit of DBP concentration (<30 ppm) to be allowed in the qualified solvent which ensured that the ammonium carbonate wash solvent can be effectively reused or recycled in the plant.

### (iii) Pu retention test:

A known amount of plutonium was added to extracting vial containing washed solvent and equilibrated for 10 minutes. Organic and aqueous were separated. Plutonium in the organic was stripped completely into aqueous phase using dilute nitric acid in three contacts. Aqueous and organic layers were separated and analysed for plutonium.

The quality criteria related data as obtained is represented in Table 4 hereunder:

**Table 4 :**

| **Plutonium retention:** | | | |
|---|---|---|---|
| **Extraction** | | | |
| Feed | | Treated/washed solvent | |
| [Pu] : | 0.5 g/L | % of TBP: | 40.8 |
| [H] : | 2.0 M | [U] : | 0.021g/L |
| Vol. = | 50.0 ml | [Pu] : | 0.0056g/L |
| | | Vol. = | 50.0 ml |
| Basis : 1:1 = A:O | | | |
| No. of Contact: 1 | | | |
| Time: 10 minutes | | | |
| Loaded organic | [U] = 0.02g/L | | |
| | [Pu] = 0.498g/L | | |
| | | | |
| Raffinate : | [Pu] = 0.005g/L | | |
| | | | |
| **Stripping :** | Stripping agent : 0.01 M HNO₃ Vol: 50 ml | | |
| | Basis : 1:1, Time : 10 minutes | | |

| **Contacts** | **[Pu] in Strip product (g/L)** | **[Pu] in lean organic (g/L)** |
|---|---|---|
| I | 0.398 | 0.099 |
| II | 0.079 | 0.020 |
| III | 0.016 | 0.005 |

The data in Table 4 above shows that only 5mg/L of plutonium was retained in the washed solvent. It indicated that the washed solvent qualified for recycling.

### Example -V :

### Treatment of lean organic/spent organic in continuous mode using Mixer Settler System involving sodium carbonate and ammonium carbonate wash solutions:

A mixer (1L capacity) and settler (5L capacity) made of glassware were installed in an alpha tight glove box and commissioned. Trials were conducted to optimize the parameters, which were very essential for continuous operation.

Spent solvent and wash solutions were fed through metering pumps at various flow rates to get different flow ratios and various residence times.

Samples of both the streams were taken at one-hour interval and analyzed for uranium, plutonium and DBP. Data collected are represented in Table 5 hereunder:

**Table 5:**

| **Data collected from mixer settler run:** | | | | | | |
|---|---|---|---|---|---|---|
| Feed organic/spent organic from the plant solution generated during high burn up FBTR fuel | | | | | | |
| Reprocessing | | | | | | |
| [Pu] = 0.854 g/L, [U]= 0.384g/L, [H⁺]=0.3M, [HDBP] = 1.04 g/L, Flow rate: organic 1.0 lph, aqueous:4.0 lph, Residential time: 15 minutes | | | | | | |

| Reagent | O/A | Treated/washed organic | | Strip product | | Remarks |
|---|---|---|---|---|---|---|
| | | U g/L | Pu g/L | U g/L | Pu g/L | |
| 10%Na₂CO₃ | 4:1 | <0.005 | 0.03 | 0.54 | 0.71 | Crud observed |
| 10%(NH₄)₂CO₃ | 4:1 | 0.09 | 0.11 | 1.15 | 2.86 | No crud formed |

As would be apparent from the results above that around 90% of plutonium and 75% of uranium were recovered from organic by single contact using aqueous ammonium carbonate in 4:1 ratio of O/A where as sodium carbonate run lead to crud formation.

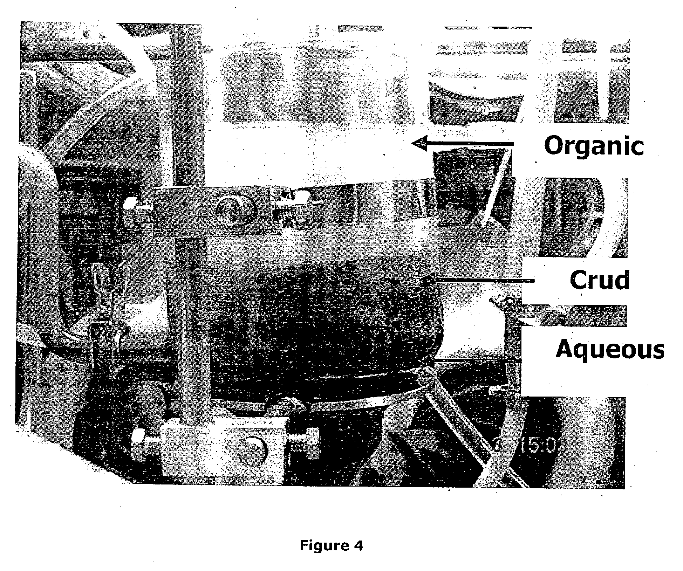

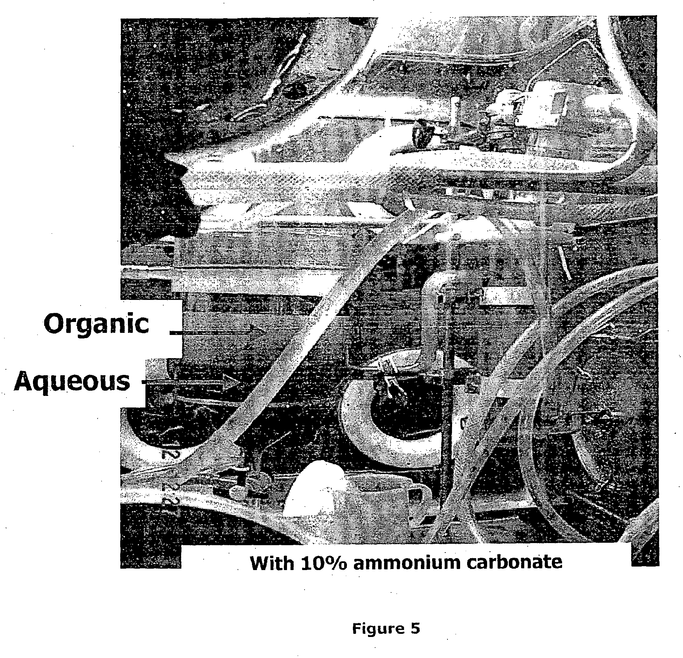

Accompanying Figure 4 shows how the solvent washing process carried out using conventional 10% sodium carbonate as the washing solution resulted in crud formation although organic/aqueous phase separation occurs and said curd formation hindering desired stripping of U and Pu and recovery of these from complexes in spent solvent and need additional equipments to operate on continuous mode. The treated solvent was thus found not fit for recycling. On the other hand as apparent from Figure 5 the solvent washing with 10% Ammonium carbonate solution resulted in effective phase separation and stripping of U and Pu such that the process is operable on continuous basis such as to generate the leaving solvent free of undesirable degradation or fission products and the level of U, Pu and DBP is fairly within acceptable limit for recycling of the treated/washed solvent. Recovery of U and Pu also provide economy of operation and reduction of solid/aqueous waste left is free of harmful radioactive properties. Moreover, while the solvent washing process facilitate stripping of the DBP, Uranium, Plutonium and Fission products from the spent solvent streams obtained from the stripper stages of PUREX process for reprocessing of FBTR fuel of High Burn Up and separated in the aqueous phase, the ammonium carbonate solution also forms strong complex with fission products like Ru and Cs, which are the more trouble some fission products present in the said spent solvent and stripped into aqueous phase without any emulsion or crud or precipitate formation. This result is illustrated in the Table 6 below:

**Table 6**

| | **[Pu] g/L** | **[U] g/L** | **[HDBP] g/L** | **Cs-activity mCi/L** | **Ru-activity mCi/L** |
|---|---|---|---|---|---|
| **Spent solvent** | **1.7** | **1.89** | **2.0** | **0.16** | **5.78** |
| **Washed solvent** | **<0.005** | **<0.005** | **<0.010** | **0.007** | **0.04** |

It would be clearly apparent from the above Table 6 that the selective ammonium carbonate washing solution could effectively treat the spent organic solvent such as to leave the organic with U and Pu levels of 5mg/L and a DBP level of 10 mg/L, making the washed solvent capable of recycling. Hence solvent washing with aqueous ammonium carbonate was found to be amenable even for plant scale by continuous mode.

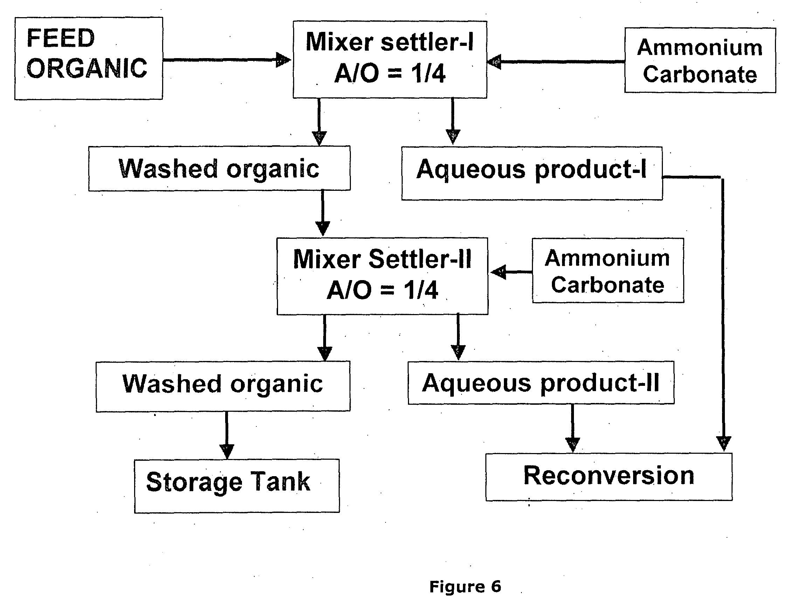

Based on the above findings a representative illustration of the system for the lean organic treatment using mixer settler as continuous mode used is shown in the accompanying Figure 6. As would be apparent from the flow diagram that Feed organic/spent organic from the plant solution generated during high burn up FBTR fuel was washed in mixer settler I & II in sequence with 5-10 % Ammonium carbonate as washing solution whereby aqueous to organic ratio maintained at 1:4 with residence time of 15 minutes. The stripped product obtained at exit from second Mixer settler I and II are sent to reconversion lab for reuse as fuel and the washed organic is stored in tank thus saving consumption of TBP. The resultant Organic (washed organic) is finally left with left over DBP and with less than 5mg/L Pu and similar content of U and thus being capable for recycling as fresh solvent.

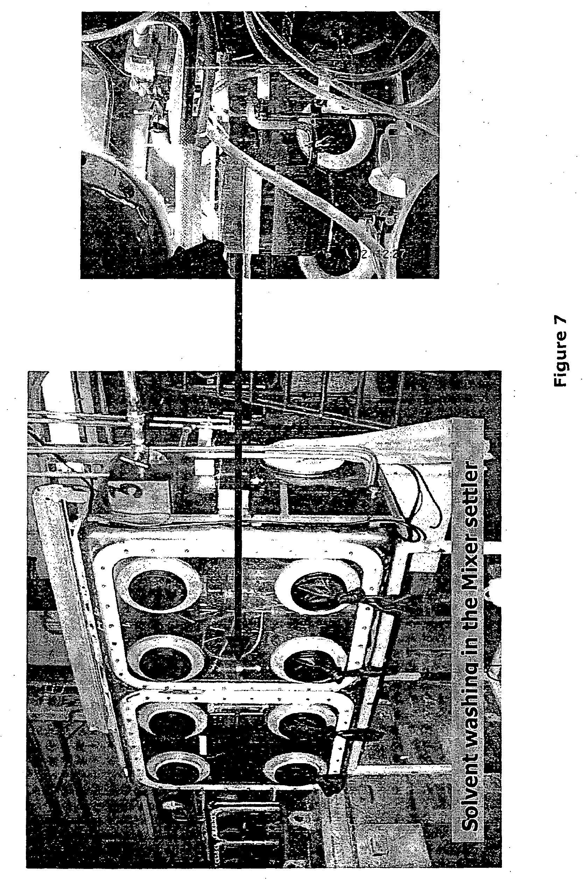

Figure 7 is the illustration of the solvent washing on continuous basis involving the selective ammonium carbonate wash solution in mixer settler in CORAL Facility. Trials done at such facility has further confirmed the suitability of the ammonium carbonate wash solution in effectively treating of the spent solvent.

It is thus possible by way of the present invention to favour effective solvent washing in Nuclear fuel Reprocessing for Fast Reactor, more particularly, effective washing of spent solvent or degraded solvent obtained from the stripper stages such as of PUREX process during the reprocessing of high burn up (from 25GWd/t to >155 GWd/t) plutonium rich (70%) mixed plutonium/Uranium carbide spent nuclear fuel of Fast Breeder Test Reactors involving a selective aqueous ammonium carbonate solution. Importantly, the selective wash solution for the spent solvent is directed to achieve complete stripping of U and Pu from the complexes in said solvent facilitating recovery of U and Pu to the extent of >99% from the lean organic/spent organic streams and enabling equilibration and separation of aqueous and organic phases without any crud or emulsion or precipitate formation. The retained U and Pu levels are below 5mg/L in the treated/washed organic having a tested quality determined in terms of permissible limits of settling time, DBP concentration and Pu retention, making it equivalent to fresh solvent such that the resultant organic/washed organic comprises less than 5mg/L of Plutonium and 5mg/L of Uranium and less than 10mg/L of DBP concentration and thus either enabling recycling of said solvent to the plant or amenable for the disposal to the waste form. More advantageously, the invention would favour achieving the desired treatment and washing of the streams of spent solvent not only to enable quantitative stripping and recovery of precious and scarce U and Pu, but also facilitate reuse and saving of TBP by way of possible recycling of treated solvent having tested and ensured quality standard.

## Claims

1. Use of a 5-10% aqueous ammonium carbonate solution in quantitative stripping of anyone or more of Uranium, Plutonium, di-butyl phosphate and fission products from TBP based spent solvent into the aqueous ammonium carbonate phase without any emulsion or crud or precipitation formation such as to leave the resultant TBP based spent solvent with U and Pu levels of less than 5 mg/L and di-butyl phosphate levels of less than 10 mg/L.

2. A process for actinide metal extracting spent solvent washing in Nuclear fuel reprocessing using a wash solution as used in claim 1 comprising:
adding said 5-10% aqueous ammonium carbonate wash solution to the spent solvent comprising tri-n-butyl phosphate, hydrocarbon diluent including dodecane, complex formed by di-butyl phosphate or other degradation products with uranium, Plutonium or fission products such as to favour forming of strong complex with constituents of the degraded solvent to thereby strip anyone or more of Uranium , Plutonium, DBP and fission products from said spent solvent into the aqueous phase free of any emulsion or crud or precipitation formation; and
equilibration and separation of the aqueous and organic phases.

3. A process for solvent washing in Nuclear fuel reprocessing as claimed in claim 2 wherein said ammonium carbonate solution forming complexes is used to strip the Uranium, Plutonium and DBP along with fission products such that the resultant organic comprises less than 5mg/L of Plutonium and 5mg/L of Uranium and less than 10mg/L of DBP concentration.

4. A process for solvent washing in Nuclear fuel reprocessing as claimed in anyone of claims 2 or 3 wherein the degraded /spent solvent is received from the stripper stages of PUREX process for the reprocessing with burn up (>155 GW d/t) Plutonium rich (70%) mixed Plutonium /Uranium carbide fuel from Fast Breeder Test Reactor (FBTR).

5. A process for solvent washing in Nuclear fuel reprocessing as claimed in anyone of claims 2 or 3 wherein the degraded /spent solvent is received from stripper stages of the reprocessing of higher burn up Plutonium rich spent fuel of any fast reactor.

6. A process for solvent washing in Nuclear fuel reprocessing as claimed in anyone of claims 2 to 5 wherein the treated organic with retained level of only <5 mg/L of Uranium and < 5 mg/L of Plutonium is either recycled as solvent for Nuclear Fuel reprocessing or rendered amenable for the disposal in waste form.

7. A process for solvent washing in Nuclear fuel reprocessing as claimed in anyone of claims 2 to 6 wherein said organic feed is subjected to multi stage contact with the aqueous ammonium carbonate solution so as to substantially strip out remaining traces of the complexes formed with the constituents of the degraded solvent and render the solvent reusable by recycling into the process of Nuclear fuel reprocessing.

8. A process for solvent washing in Nuclear fuel reprocessing as claimed in claim 7 wherein prior to recycling the treated spent solvent the same is subjected to solvent quality analysis involving (a) settling time evaluation (b) estimation of DBF concentration and (c) Plutonic retention test.

9. A process for solvent washing in Nuclear fuel reprocessing as claimed in anyone of claims 7 or 8 wherein if the quality criteria of the treated spent solvent including said settling time, DBP concentration and Plutonic Retention are found comparable with the fresh solvent the treated solvent is continuously recycled into the process.

10. A process for solvent washing in Nuclear fuel reprocessing as claimed in anyone of claims 2 to 9 wherein said aqueous ammonium carbonate solution forms strong complexes with fission products including Ru & Cs and stripped into the aqueous phase without any emulsion or crude or precipitate formation.

11. A process for solvent washing in Nuclear fuel reprocessing as claimed in anyone 2 to 10 wherein said aqueous to organic contact is done is stages involving plurality of settler tanks with treated/washed organic from the preceding tank subjected to a further contact with ammonium carbonate in another subsequent settler tank until the washed solvent attains a desired quality suitable for recycling.

12. A process for solvent washing in Nuclear fuel reprocessing as claimed in anyone 2 to 11 wherein the aqueous to organic ratio used is of 1 to 2 : 1 to 5 preferably 1:4.

13. A process for solvent washing in Nuclear fuel reprocessing as claimed in anyone 2 to 12 comprising recovering the Uranium/Plutonium from the carbonate complex.

14. A system for carrying out continuously process as claimed in anyone of claims 2 to 13 for treatment of said actinide metal extracting spent solvent released from a process for separation and purification of Plutonium and Uranium from spent fuel of fast reactors comprising:
contacting the spent solvent comprising tri-n-butyl phosphate, hydrocarbon diluent including dodecane, complex formed by di-butyl phosphate or other degradation products with uranium, Plutonium or fission products with ammonium carbonate solution in atleast one mixer settler whereby the washed organic and aqueous product containing said carbonate complex are recovered separately ;
means to continuously store and recycle the washed solvent with desired characteristics for subsequent use for separation of Uranium and Plutonium from spent fuel of fast reactor and means to continuously store and then subject the aqueous phase recovered to treatment to reclaim the Plutonium and Uranium therefrom for subsequent use based on end characteristics of the recovered metal.

15. A system for carrying out continuously process as claimed in claim 14 comprising subjecting the washed organic to further subsequent contact with ammonium carbonate in further mixer settlers downstream unit the washed solvent attains the desired characteristics for said recycling.

16. A process for separation and purification of Plutonium and Uranium from spent fuel of fast reactors comprising:
i) using a actinide metal extracting spent solvent comprising Tri-n-butyl phosphate in n-dodecane for said separation and purification of Plutonium and Uranium from the spent fuel of fast reactors; and
ii) washing of the spent solvent comprising tri-n-butyl phosphate, hydrocarbon diluent including dodecane, complex formed by di-butyl phosphate or other degradation products with uranium, Plutonium or fission products thereby stripping of anyone or more of Uranium, Plutonium, DBP and fission products used in the step i) above with 5 to 10% ammonium carbonate solution following the process as claimed in anyone of claims 2 to 13.

17. A process as claimed in claim 16 wherein the thus washed solvent is continuously recycled into the process.

18. A process as claimed in anyone of claims 16 or 17 wherein the quantitative recovery of Plutonium and Uranium from the spent solvent and the treated solvent are analyzed and reused based on its quality.

## Patentansprüche

1. Verwendung einer 5-10%igen wässrigen Ammoniumkarbonatlösung beim quantitativen Austreiben eines oder mehrerer aus Uran, Plutonium, Dibutylphosphat und Spaltprodukten aus einem verbrauchten Lösungsmittel auf TBP-Basis in die wässrige Ammoniumkarbonatphase ohne jede Emulsions- oder Mulm- oder Fällungsbildung, so dass das sich daraus ergebende verbrauchte Lösungsmittel auf TBP-Basis mit Niveaus von U und Pu von weniger als 5 mg/L und mit Niveaus von Dibutylphosphat von weniger als 10 mg/L gelassen wird.

2. Verfahren zum Waschen eines verbrauchten, Aktinidenmetall extrahierenden Lösungsmittels in der Wiederaufarbeitung von Nuklearbrennstoffen unter Verwendung einer Waschlösung wie nach Anspruch 1 verwendet, umfassend:
Hinzufügen der genannten 5-10%igen wässrigen Ammoniumkarbonat-Waschlösung zum verbrauchten Lösungsmittel, das Tri-n-butyl-phosphat, ein Kohlenwasserstoff-Verdünnungsmittel einschließlich Dodekans, einen Komplex gebildet durch Di-butyl-phosphat oder andere Abbauprodukte mit Uran, Plutonium oder Spaltprodukten umfasst, um die Bildung eines starken Komplexes mit Bestandteilen des abgebauten Lösungsmittels zu fördern, um dadurch ein oder mehrere aus Uran, Plutonium, DBP und Spaltprodukte aus dem genannten verbrauchten Lösungsmittel in die wässrige Phase ohne jede Emulsions- oder Mulm- oder Fällungsbildung auszutreiben; und
Herstellung eines Gleichgewichts und Trennung der wässrigen und organischen Phasen.

3. Verfahren zum Waschen eines Lösungsmittels in der Wiederaufarbeitung von Nuklearbrennstoffen nach Anspruch 2, worin die genannte Ammoniumkarbonatlösung, die Komplexe bildet, verwendet wird, um das Uran, Plutonium und DBP zusammen mit Spaltprodukten auszutreiben, so dass das sich daraus ergebende organische Produkt weniger als 5 mg/L Plutonium und 5 mg/L Uran und weniger als 10 mg/L DBP-Konzentration aufweist.

4. Verfahren zum Waschen eines Lösungsmittels in der Wiederaufarbeitung von Nuklearbrennstoffen nach einem der Ansprüche 2 oder 3, worin das abgebaute/verbrauchte Lösungsmittel aus den Austreibschritten des PUREX-Verfahrens zur Wiederaufarbeitung mit einem einen Abbrand aufweisenden (> 155 GW d/t), an Plutonium reichen (70%), gemischten Plutonium/Uran-Karbidbrennstoff aus einem Versuchs-Schnell-Brutreaktor (FBTR) erhalten wird.

5. Verfahren zum Waschen eines Lösungsmittels in der Wiederaufarbeitung von Nuklearbrennstoffen nach einem der Ansprüche 2 oder 3, worin das abgebaute/verbrauchte Lösungsmittel aus den Austreibschritten der Wiederaufarbeitung von einem einen höheren Abbrand aufweisenden, an Plutonium reichen verbrauchten Brennstoff eines jeden Schnellreaktors erhalten wird.

6. Verfahren zum Waschen eines Lösungsmittels in der Wiederaufarbeitung von Nuklearbrennstoffen nach einem der Ansprüche 2 bis 5, worin das behandelte organische Produkt mit einem zurückbehaltenen Niveau von nur <5 mg/L Uran und <5 mg/L Plutonium entweder als Lösungsmittel für die Wiederaufarbeitung von Nuklearbrennstoffen wiederverwertet oder für die Entsorgung in Form von Abfall geeignet gemacht wird.

7. Verfahren zum Waschen eines Lösungsmittels in der Wiederaufarbeitung von Nuklearbrennstoffen nach einem der Ansprüche 2 bis 6, worin das genannte organische Beschickungsgut einem mehrstufigen Kontakt mit der wässrigen Ammoniumkarbonatlösung unterzogen wird, um übriggebliebene Spuren der Komplexe, die mit den Bestandteilen des abgebauten Lösungsmittels gebildet sind, im Wesentlichen auszutreiben und das Lösungsmittel durch Wiederverwertung in den Prozess der Wiederaufarbeitung von Nuklearbrennstoffen wiederverwendbar zu machen.

8. Verfahren zum Waschen eines Lösungsmittels in der Wiederaufarbeitung von Nuklearbrennstoffen nach Anspruch 7, worin, bevor das behandelte verbrauchte Lösungsmittel wiederverwertet wird, dasselbe einer Qualitätsuntersuchung des Lösungsmittels unterzogen wird, die (a) eine Bewertung der Absetzzeit, (b) eine Schätzung der DBP-Konzentration und (c) eine Rückhalteprobe des Plutoniums umfasst.

9. Verfahren zum Waschen eines Lösungsmittels in der Wiederaufarbeitung von Nuklearbrennstoffen nach einem der Ansprüche 7 oder 8, worin, wenn die Qualitätskriterien des behandelten verbrauchten Lösungsmittels, einschließlich der genannten Absetzzeit, DBP-Konzentration und Rückhaltung des Plutoniums, für mit dem frischen Lösungsmittel vergleichbar befunden sind, das behandelte Lösungsmittel in den Prozess kontinuierlich zurückgeführt wird.

10. Verfahren zum Waschen eines Lösungsmittels in der Wiederaufarbeitung von Nuklearbrennstoffen nach einem der Ansprüche 2 bis 9, worin die genannte wässrige Ammoniumkarbonatlösung starke Komplexe mit Spaltprodukten einschließlich Ru und Cs bildet und in die wässrige Phase ohne jede Emulsions- oder Mulm- oder Fällungsbildung ausgetrieben ist.

11. Verfahren zum Waschen eines Lösungsmittels in der Wiederaufarbeitung von Nuklearbrennstoffen nach einem der Ansprüche 2 bis 10, worin der genannte Kontakt von wässrig zu organisch in Schritten durchgeführt wird, wobei eine Vielzahl von Absetztanks mit behandeltem/gewaschenem organischem Produkt aus dem vorhergehenden Tank eingesetzt wird, das einem weiteren Kontakt mit Ammoniumkarbonat in einem anderen, nachfolgenden Absetztank unterzogen wird, bis das gewaschene Lösungsmittel eine gewünschte, für die Wiederverwertung geeignete Qualität erreicht.

12. Verfahren zum Waschen eines Lösungsmittels in der Wiederaufarbeitung von Nuklearbrennstoffen nach einem der Ansprüche 2 bis 11, worin das verwendete Verhältnis wässrig zu organisch 1 : 2 bis 1 : 5, vorzugsweise 1 : 4 beträgt.

13. Verfahren zum Waschen eines Lösungsmittels in der Wiederaufarbeitung von Nuklearbrennstoffen nach einem der Ansprüche 2 bis 12, das die Rückgewinnung von Uran/Plutonium aus dem Karbonatkomplex umfasst.

14. System zum kontinuierlichen Durchführen eines Verfahrens nach einem der Ansprüche 2 bis 13 zur Behandlung des genannten verbrauchten, Aktinidenmetall extrahierenden Lösungsmittels, das aus einem Verfahren zur Trennung und Reinigung von Plutonium und Uran aus verbrauchtem Brennstoff von Schnellreaktoren freigesetzt wird, umfassend:
das In-Kontakt-Bringen des verbrauchten Lösungsmittels, das Tri-n-butyl-phosphat, ein Kohlenwasserstoff-Verdünnungsmittel einschließlich Dodekans, einen Komplex gebildet durch Di-butyl-phosphat oder andere Abbauprodukte mit Uran, Plutonium oder Spaltprodukten umfasst, mit der Ammoniumkarbonatlösung in zumindest einem Mischabsetzer, worin das gewaschene organische und wässrige Produkt, das den genannten Karbonatkomplex enthält, gesondert zurückgewonnen werden;
Mittel, um das gewaschene Lösungsmittel mit gewünschten Eigenschaften für die anschließende Verwendung von Uran und Plutonium aus verbrauchtem Brennstoff von Schnellreaktoren kontinuierlich zu speichern und wiederzuverwerten, und Mittel, um die rückgewonnene wässrige Phase kontinuierlich zu speichern und danach einer Behandlung zu unterziehen, um das Plutonium und Uran daraus für eine nachfolgende Verwendung aufgrund der Endeigenschaften des rückgewonnenen Metalls zu regenerieren.

15. System zum kontinuierlichen Durchführen eines Verfahrens nach Anspruch 14, umfassend das Unterziehen des gewaschenen organischen Produktes einem weiteren nachfolgenden Kontakt mit Ammoniumkarbonat in weiteren, nachgeschalteten Mischabsetzern, bis das gewaschene Lösungsmittel die gewünschten Eigenschaften für die genannte Wiederverwertung erzielt.

16. Verfahren zur Trennung und Reinigung von Plutonium und Uran aus verbrauchtem Brennstoff von Schnellreaktoren, umfassend:
i) Verwenden eines verbrauchten, Aktinidenmetall extrahierenden Lösungsmittels, das Tri-n-butyl-phosphat in n-Dodekan für die genannten Trennung und Reinigung von Plutonium und Uran aus dem verbrauchten Brennstoff von Schnellreaktoren umfasst; und
ii) Waschen des verbrauchten Lösungsmittels, das Tri-n-butyl-phosphat, ein Kohlenwasserstoff-Verdünnungsmittel einschließlich Dodekans, einen Komplex gebildet durch Dibutyl-phosphat oder andere Abbauprodukte mit Uran, Plutonium oder Spaltprodukten umfasst, wobei dadurch ein oder mehrere aus Uran, Plutonium, DBP und Spaltprodukte, die im obigen Schritt i) verwendet werden, mit 5 bis 10%iger Ammoniumkarbonatlösung im Anschluss an das Verfahren nach einem der Ansprüche 2 bis 13 ausgetrieben werden.

17. Verfahren nach Anspruch 16, worin das so gewaschene Lösungsmittel in den Prozess kontinuierlich zurückgeführt wird.

18. Verfahren nach einem der Ansprüche 16 oder 17, worin die quantitative Rückgewinnung von Plutonium und Uran aus dem verbrauchten Lösungsmittel und dem behandelten Lösungsmittel aufgrund ihrer Qualität untersucht und wiederverwendet werden.

## Revendications

1. Utilisation d'une solution aqueuse au carbonate d'ammonium à 5-10% pour la séparation quantitative d'un ou plusieurs parmi uranium, plutonium, phosphate de dibutyle et produits de fission d'un solvant usé à base de TBP, pour obtenir la phase aqueuse du carbonate d'ammonium sans aucune formation d'émulsion ou impuretés ou précipitation, de manière à laisser le solvant usé à base de TBP ainsi résultant avec des niveaux d'U et de P inférieurs à 5 mg/l et des niveaux de phosphate de dibutyle inférieurs à 10 mg/l.

2. Procédé de lavage au solvant usé d'extraction de métaux actinides pour un retraitement de combustible nucléaire faisant intervenir une solution de lavage selon la revendication 1, comprenant les étapes suivantes :
ajout de ladite solution aqueuse au carbonate d'ammonium au solvant usé comprenant tri-n-butyl phosphate, un diluant hydrocarbure, comprenant du dodécane, un complexe constitué de di-butyl phosphate ou d'autres produits de dégradation avec de l'uranium, du plutonium et des produits de fission de manière a favoriser la formation de complexes forts avec des constituants du solvant dégradé pour obtenir ainsi la séparation d'un ou plusieurs parmi pour obtenir la phase aqueuse sans aucune formation d'uranium, plutonium, DBP et produits de fission dudit solvant usé,émulsion/impuretés ou précipitation ; et
équilibration et séparation des phase aqueuse et organique.

3. Procédé de lavage au solvant pour un retraitement de combustible nucléaire selon la revendication 2, dans lequel ladite solution au carbonate d'ammonium formant des complexes est utilisée pour séparer l'uranium, le plutonium, et le DBP aussi bien que des produits de fission, de manière que la matière organique résultante comprenne une concentration de moins de 5 mg/l de plutonium, de 5 mg/l d'uranium et moins de 10 mg/l de DBP.

4. Procédé de lavage au solvant pour un retraitement de combustible nucléaire selon n'importe laquelle des revendications 2 et 3, dans lequel le solvant dégradé/usé est reçu des étapes de séparation d'un procédé PUREX avec un combustible mixte riche en plutonium (70%) de plutonium et carbure d'uranium avec burn-up (> 155 GW d/t), provenant d'un réacteur de type Fast Breeder Test Reactor (FBTR).

5. Procédé de lavage au solvant pour un retraitement de combustible nucléaire selon n'importe laquelle des revendications 2 et 3, dans lequel le solvant dégradé/usé est reçu des étapes de séparation pour le retraitement d'un combustible usé riche en plutonium à burn-up supérieur.

6. Procédé de lavage au solvant pour un retraitement de combustible nucléaire selon n'importe laquelle des revendications 2 à 5, dans lequel la matière organique traitée avec un niveau limité de < 5 mg/l d'uranium et de < 5 mg/l de plutonium, est recyclée comme solvant pour le retraitement de combustible nucléaire ou préparé pour l'évacuation en forme de déchets.

7. Procédé de lavage au solvant pour un retraitement de combustible nucléaire selon n'importe laquelle des revendications 2 à 6, dans lequel ladite charge organique est exposée à plusieurs étapes de contact avec la solution aqueuse au carbonate d'ammonium pour obtenir sensiblement la séparation des traces résiduelles des complexes formés avec les constituants du solvant dégradé et pour permettre une nouvelle utilisation du solvant par recyclage dans un procédé de retraitement de combustible nucléaire.

8. Procédé de lavage au solvant pour un retraitement de combustible nucléaire selon la revendication 7, dans lequel avant le recyclage du solvant usé traité, celui-ci est soumis à une analyse de qualité du solvant, comportant (a) une évaluation du temps de décantation, (b) une estimation de la concentration de DBP et (c) un test de rétention du plutonium.

9. Procédé de lavage au solvant pour un retraitement de combustible nucléaire selon n'importe laquelle des revendications 7 et 8, dans lequel si les critères de qualité du solvant usé traité, y-compris le temps de décantation, la concentration de DBP et la rétention du plutonium sont trouvés comparables avec ceux du solvant frais, le solvant traité est recyclé en continu dans le procédé.

10. Procédé de lavage au solvant pour un retraitement de combustible nucléaire selon n'importe laquelle des revendications 2 à 9, dans lequel ladite solution au carbonate d'ammonium forme des complexes forts avec des produits de fission tels que Ru & Cu séparés pour obtenir la phase aqueuse sans aucune formation d'émulsion ou impuretés ou précipitation.

11. Procédé de lavage au solvant pour un retraitement de combustible nucléaire selon n'importe laquelle des revendications 2 à 10, dans lequel ledit contact entre la phase aqueuse et la phase organique est effectué à travers des étapes comportant une pluralité de bassins de décantation, la matière organique traitée/lavée du bassin précédent étant soumise à un autre contact avec le carbonate d'ammonium dans un autre bassin de décantation successif, jusqu'à ce que le solvant lavé atteigne une qualité souhaitée permettant le recyclage.

12. Procédé de lavage au solvant pour un retraitement de combustible nucléaire selon n'importe laquelle des revendications 2 à 11, dans lequel le rapport entre phase aqueuse et phase organique utilisé et de 1 à 2 : 1 à 5, de préférence 1 : 4.

13. Procédé de lavage au solvant pour un retraitement de combustible nucléaire selon n'importe laquelle des revendications 2 à 12, important la récupération de l'uranium/plutonium du complexe de carbonate.

14. Système pour effectuer en continu le procédé selon n'importe laquelle des revendications 2 à 13 pour le traitement dudit solvant usé d'extraction de métaux actinides à partir d'un procédé de séparation et purification de plutonium et d'uranium d'un combustible usé de réacteurs rapides, comprenant :
la mise en contact du solvant usé comprenant tri-n-butyl phosphate, un diluant hydrocarbure, comprenant du dodécane, un complexe constitué de di-butyl phosphate ou d'autres produits de dégradation avec de l'uranium, du plutonium ou des produits de fission, avec la solution au carbonate d'ammonium dans au moins un mélangeur-décanteur, par lequel le produit organique lavé et le produit aqueux formant ledit complexe de carbonate sont récupérés séparément ;
des moyens de stockage et de recyclage en continu du solvant lavé ayant des caractéristiques désirées pour une utilisation successive dans la séparation de l'uranium et du plutonium du combustible usé de réacteur rapide et des moyens de stockage en continu et de traitement de la phase aqueuse récupérée pour la régénération du plutonium et de l'uranium de celle-ci, pour une utilisation successive, sur la base des caractéristiques finales du métal récupéré.

15. Système pour effectuer en continu le procédé selon la revendication 14, comportant des mises en contacts successives de la matière organique lavée avec le carbonate d'ammonium dans plusieurs mélangeurs-décanteurs en aval, jusqu'à ce que le solvant lavé atteigne une qualité souhaitée permettant ledit recyclage.

16. Procédé de séparation et de purification de plutonium et d'uranium d'un combustible usé de réacteurs rapides comprenant les étapes suivantes :
i) utilisation d'un solvant usé d'extraction de métaux actinides comprenant tri-n-butyl phosphate en n-dodécane, pour lesdites séparation et purification de plutonium et d'uranium d'un combustible usé de réacteurs rapides ; et
ii) lavage du solvant usé comprenant tri-n-butyl phosphate, un diluant hydrocarbure, comprenant du dodécane, un complexe constitué de di-butyl phosphate ou d'autres produits de dégradation avec de l'uranium, du plutonium et des produits de fission de manière a séparer un ou plusieurs parmi uranium, plutonium, DBP et produits de fission, utilisé dans l'étape précédente i) avec une solution au carbonate d'ammonium à 5 - 10%, suivant le procédé selon n'importe laquelle des revendications 2 à 13.

17. Procédé selon la revendication 16, dans lequel le solvant ainsi lavé est recyclé en continu dans le procédé.

18. Procédé selon n'importe laquelle des revendications 16 et 17, dans lequel la récupération quantitative de plutonium et d'uranium du solvant usé et le solvant traité sont analysés et réutilisés selon leur qualité.
